# EUROPEAN PATENT APPLICATION

(11) **EP 4 618 109 A1**
(43) Date of publication of application: **17.09.2025**
(21) Application number: 24163236.3
(22) Date of filing: 13.03.2024
(51) Int. Cl.: H01B 3/40, C08J 3/28, C08J 5/24, H01B 7/02, H02K 3/30, H01B 3/04, B32B 27/12, B32B 27/14, B32B 27/36, B32B 27/38, H01B 13/10

(54) **COIL MANUFACTURING PROCESS USING UV-TRANSPARENT MICA TAPES FOR GROUNDWALL INSULATION**

(71) Applicant: ABB SCHWEIZ AG, 5400 Baden (CH)
(72) Inventor: LEAL-AYALA, Andrés, 5408 Ennetbaden (CH); PINTO, Cajetan Thomas, 28027 Madrid (ES)
(74) Representative: Zimmermann & Partner Patentanwälte mbB

(57) **Abstract**

A method for electrically insulating a metallic conductor is provided, whereby the electrically insulating material represents an UV-curable insulation tape comprising a resin formulation, which at least comprises a thermoset resin and a dielectric insulator, both UV-transparent, as well as a photo-initiator. In this method, the UV-curable insulation tape is brought into a prepreg state prior to being applied to the metallic conductor. Once the prepreg UV-curable insulation tape is applied on the metallic conductor, it can be fully cured by using UV radiation.

Due to the characteristics of the resin formulation, the method provided does not only allow insulating metallic conductors or providing groundwall insulation, it also allows for repairing pre-existing, yet damaged insulating material.

## Description

### Technical field

The present disclosure relates to insulation methods, in particular for metallic conductors, using a UV-curable insulation tape.

### Technical background:

Proper insulation, especially groundwall insulation, is one of the key features required to guarantee the functionality of electrical machines and to avoid danger by preventing short circuits. Yet, providing a functioning insulation can become a challenging task if the electrical machine comprises more than one conducting element and/or if these conducting elements possess non-trivial structures, such as, e.g., coil wires or stator winding. In these cases, the conductors and/or their elements not only need to be insulated from each other but also from further components having ground potential, which makes a groundwall insulation necessary.

To provide a metallic conductor with an insulation, especially a groundwall insulation, there are established methods such as, e.g., Resin Rich (RR) or Vacuum Pressure Impregnation (VPI). These methods, however, can be very time-consuming and they require elevated temperatures and pressures. Thus, there is an unmet need for an insulation method, which works at milder conditions and needs less time.

Once insulated, a common problem, in particular for coils, may be winding failure, which often makes a rewinding of the rotor or stator necessary. For industry, however, this becomes problematic due to the possible downtime of the concerned electrical machine and the accompanying costs. Thus, there is another unmet need for an insulation method, which can be used to quickly replace and repair the damaged insulation in wound coils.

### Summary of the invention

In view of the above, a method for electrically insulating a metallic conductor according to claim 1, a use according to claim 14, and a tape according to claim 15 are provided.

The method comprises providing a pre-impregnated (prepreg) insulation tape that comprises a UV-curable dielectric resin formulation in a semi-cured B stage, applying the prepreg tape as an electrical insulation to the metallic conductor, and fully-curing the prepreg tape to a C stage by applying UV radiation to the prepreg tape.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a flow chart of a method for electrically insulating a metallic conductor according to embodiments of the present disclosure.
- Fig. 2a-c: illustrate possible embodiments for the insulation tape in the sense of the present disclosure.
- Fig. 3a-c: show possible embodiments for providing insulation to a metallic conductor in the sense of the present disclosure.
- Fig. 4a-b: illustrate possible embodiments for removing air and/or excess resin from the insulation tape applied to a metallic conductor in the sense of the present disclosure.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment or aspect can be used on or in conjunction with any other embodiment or aspect to yield yet a further embodiment or aspect. It is intended that the present disclosure includes such modifications and variations.

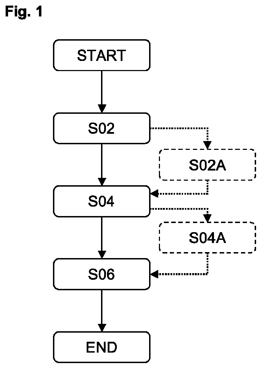

In one embodiment as shown in the flow chart in Fig. 1, the method for electrically insulating a metallic conductor comprises providing a prepreg tape that comprises a UV-curable dielectric resin formulation in a semi-cured B stage (S02), applying the prepreg tape as an electrical insulation to the metallic conductor (S04) and fully-curing the prepreg tape by applying UV radiation to the prepreg tape (S06).

In another embodiment, the method for electrically insulating a metallic conductor comprises providing a prepreg tape that comprises a UV-curable dielectric resin formulation in a semi-cured B stage (S02), applying the prepreg tape as an electrical groundwall insulation to the metallic conductor (S04) and fully-curing the prepreg tape by applying UV radiation to the prepreg tape (S06).

Further steps (S02A, S04A) may be included in the method without deviating from the scope of the present disclosure:
In one embodiment, the method includes, as, e.g., step S02A, removing pre-existing, damaged insulation of the metallic conductor at least partially, before applying the insulation to the metallic conductor (S04) at and/or around the location, from which the pre-existing, damaged insulation of the metallic conductor has been removed at least partially.

In another embodiment, the method further includes as, e.g., step S04A, a custom time span between applying the prepreg tape on the metallic conductor (S04) and fully-curing the prepreg tape (S06).

Additionally and/or alternatively, one of the additional steps (S04A) may involve the removal of air, which has been encapsulated while applying the prepreg tape as an electrical insulation to the metallic conductor and/or during the custom time span after applying the prepreg tape as an insulation to the metallic conductor. Additionally and/or alternatively, one of the steps (S04A) may involve the removal of excess resin, which may be desired before fully-curing the prepreg tape by applying UV radiation to the prepreg tape (S06).

For those purposes, another embodiment of the method according to the claims of the present disclosure involves applying high-frequency vibration to the metallic conductor, on which the prepreg tape has been applied. A frequency may be chosen from the high-frequency regime.

Preferably, the frequency may be at least 15 kilohertz (kHz) and at most 60 kilohertz (kHz), more preferably at least 20 kilohertz (kHz), even more preferably 25 kilohertz (kHz) and/or at most 45 kilohertz (kHz).

In another embodiment, the method further includes applying pressures to the metallic conductor, on which the prepreg tape has been applied. The pressure may be chosen to be higher or equal to 1 atmosphere (atm). The pressure may be chosen to be lower than 1 atmosphere (atm). If the high-frequency vibration is not applied on the metallic conductor, pressures may be used down to 100 - 500 millibar (mbar).

The high-frequency vibration and/or the pressure may be applied via, e.g., a (compressible) UV-transparent mold or a shrink tape.

While the foregoing is directed to embodiments, other and further embodiments may be devised without departing from the basic scope determined by the claims.

Next, general aspects of the invention are described. Each aspect can be combined with any other aspect or embodiment, unless otherwise described:
According to a first aspect, the UV-curable dielectric resin formulation comprises a thermoset resin and a dielectric insulator, both UV-transparent, as well as a photo-initiator.

According to a second aspect, the methods according to the present disclosure may serve to provide a groundwall insulation to the metallic conductor.

An advantage of embodiments is that the curing process for obtaining the B stage insulation tape and/or obtaining the C stage insulation tape may be performed at milder conditions and in less time than it may be necessary for other insulation methods, e.g., RR process.

According to a third aspect, there may be a custom time span after applying the prepreg insulation tape to the metallic conductor. A metallic conductor may be wrapped with the prepreg insulation tape, but the fully-curing of the insulation tape does not have to directly follow applying the prepreg insulation tape to the metallic conductor. As such, another advantage of the methods according to the present disclosure may be that damages in the insulation of the metallic conductor may be circumvented, which may occur during, e.g., transportation of the metallic conductor to its target site.

Embodiments are also directed to the characteristics of the UV-curable insulation tape such as, e.g., its composition, instant curing characteristics or structural organisation of the insulation tape. Instant curing characteristics may be advantageous for, e.g., repairing the existing insulation of, e.g., a wound coil.

### [the coil]

One aspect of the invention is the metallic conductor that is to be insulated. As metallic conductors, single or multiple conductors may be used. The metallic conductors may be arranged in, e.g., layered, bundled, coiled or wired structures. According to one aspect, the metallic conductor is a coil. The coil may be pre-shaped. If a coil is to be insulated using any method according to the present disclosure, the coils can be rated for voltage of at least 200 Volt (V) and at most 15 kilovolt (kV). The insulation according to an aspect of the present invention may be a groundwall insulation of a metallic conductor, such as, e.g., a coil. For this purpose, the metallic conductor may already be provided with inter-winding insulation, and the insulating of the metallic conductor may be the application of a groundwall insulation to the insulator already provided with the inter-winding insulation. More generally, the metallic conductor may be provided already with an insulation layer. In alternative embodiments, the metallic conductor may be provided as a naked conductor without any insulation layer provided thereon.

### [the resin formulation]

According to one aspect of the present disclosure, the UV-curable dielectric resin formulation comprises a UV-transparent resin such as, e.g., polyester, vinyl ester or epoxy. Further, the UV-curable dielectric resin formulation comprises a photo-initiator such as, e.g., Irgacure 819, in an amount up to 10 wt.%, preferably between 5 - 10 wt.%. The UV-curable dielectric resin formulation also comprises a UV-transparent dielectric insulator, such as, e.g., fluorphlogopite mica, in an amount up to 20 wt.%.

### [the insulation tape]

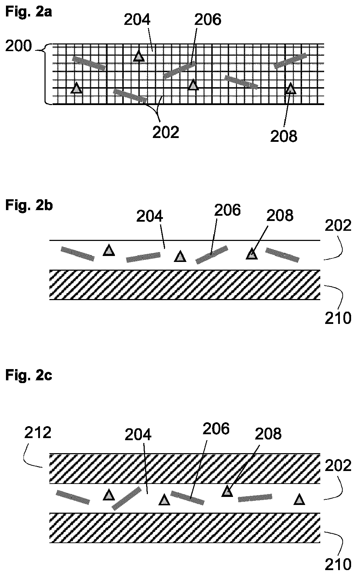

Fig. 2 a - c depict possible embodiments for the insulation tape in the sense of the present disclosure. According to one embodiment, the insulation tape comprises a matrix of an insulating material (200), such as, e.g., glass fibres, which hosts a UV-curable dielectric resin formulation (202; Fig. 2a). The UV-curable dielectric resin formulation (202) may at least comprise an UV-transparent thermoset resin (204), a UV-transparent dielectric insulator (206) and a photo-initiator (208). The matrix material may be woven or layered, regularly or irregularly, incorporating space for hosting the UV-curable dielectric resin formulation. If glass fibres are chosen for the matrix material, the type of glass fibre fabric may be, e.g., warp-knitted stitch bonded felt, plaid lapped felt, plaid stitch-bonded felt.

In another embodiment, the UV-curable dielectric resin formulation (202) is applied on a film-like material (210; Fig. 2b). In another embodiment, the UV-curable dielectric resin formulation may be sandwiched between two film-like materials (210,212; Fig. 2c).

The final thickness of the insulation tape can be adapted to the field of use by combining the UV-curable dielectric resin formulation with the fibrous or film-like material in a specific ratio. Preferably the ratio between resin and fibrous or film-like material may be chosen from 25% / 75% to 50% / 50%. Besides the final thickness, the ratio between resin and fibrous or film-like material may also influence the instant curing characteristics of the resulting insulation tape. In one embodiment, the UV-curable insulation tape has instant curing characteristics. The ability of the insulation tape to be instantly cured may be advantageous for insulating, e.g., wound coils as described by any of the methods according to the present disclosure.

In terms of the characteristics of the insulation tape, three stages may be differentiated. The uncured stage may represent all conditions of the insulation tape once it has been obtained and before it is further processed by, e.g., exposure to UV radiation. The prepreg stage or B stage may be achieved by applying UV radiation to the uncured stage insulation tape. The B stage insulation tape may be described as having between 30% and 70% of completion of curing, preferably 50%. This may be achieved by applying a UV radiation with a power of 250 - 400 Watt (W) to the uncured insulation tape. Depending on the circumstances given by the inherent properties of the insulation tape, such as, e.g., its thickness, and the power of the UV radiation, achieving the B stage insulation tape by exposing the uncured insulation tape to UV radiation may take less than 100 seconds (s), preferably less than 50 seconds (s), more preferably less than 25 seconds (s), but at least 10 seconds (s).

Once the insulation tape has reached the B stage, it may still be tacky. This tackiness of the prepreg tape is important for the ability to apply it true to form to the metallic conductor. To maintain its properties, the prepreg insulation tape may require to be covered by a passivating and/or inert, foil-like material such as, e.g., synthetic polymers or aluminium. In particular, the use of a covering material may be necessary, if the prepreg tape is to be, e.g., transported, stored or used in any other way before it has been applied to a metallic conductor and/or reached the fully cured stage.

It is to be understood that the covering material is impermeable for any UV radiation that may accidentally harden or otherwise modify the prepreg insulation tape. Apart from the protection against UV radiation, the covering material is to be chosen so that it further prevents any damages by dust or other influences, which one comes across while, e.g., transporting, storing, using or handling the prepreg tape. Preferably, the covering material is further chosen so that it possesses a certain flexibility, which allows the covered prepreg insulation tape to be rolled out and/or to be applied true to form to the metallic conductor that is to be insulated.

Finally, according to the present disclosure, the C stage or fully cured stage is achieved by applying a UV radiation with a power of 250 - 400 Watt (W) to the prepreg insulation tape until at least 80% of completion of curing is reached. Depending on the circumstances given by the inherent properties of the prepreg insulation tape, such as, e.g., its thickness, and the power of the UV radiation, achieving the C stage insulation tape by exposing the B stage insulation tape to UV radiation may take less than 50 minutes, preferably less than 30 minutes, more preferably less than 10 minutes, but at least 5 minutes.

In one embodiment, achieving the B stage starting from the uncured insulation tape by applying UV radiation to the uncured insulation tape as described above, is performed at standard conditions. In another embodiment, achieving the C stage starting from the B stage insulation tape by applying UV radiation to the B stage insulation tape as described above, is performed at standard conditions. In yet another embodiment, both achieving the B stage starting from the uncured insulation tape by applying UV radiation to the uncured insulation tape and achieving the C stage starting from the B stage insulation tape by applying UV radiation to the B stage insulation tape as described above, are performed at standard conditions. Please note, "standard conditions" are here referred to as normal temperature (293.5 Kelvin) and normal pressure (1 atmosphere).

### [the time span]

According to one aspect, there may be a custom time span between applying the prepreg UV-curable dielectric insulation tape to the metallic conductor and fully-curing the prepreg tape by applying UV radiation to the prepreg tape.

This custom time span may be chosen case-specifically. For example, the custom time span may be the time that elapses while preparing the fully-curing of the prepreg tape, e.g., providing the necessary tools. Such time spans may come up, e.g., if the method for electrically insulating a metallic conductor according to present disclosure is performed on-site. In this regard, "on-site" means that the prepreg UV-curable dielectric insulation tape may be applied to the metallic conductor and directly, e.g., immediately, fully cured afterwards.

Alternatively, the custom time span may also be a break, which may be caused by the fact that applying the prepreg tape on the metallic conductor and fully-curing the prepreg tape are not performed at the same location. For example, if the prepreg tape is applied on the metallic conductor in, e.g., a centralised shop, while the fully-curing may be performed elsewhere, the custom time span may include the time of the transportation of the metallic conductor on which the prepreg tape is applied.

### [completion of curing of the prepreg tape]

According to one aspect, the insulation tape may be described by the extent of completion of curing. Within the scope of the present disclosure, this curing progress is to be understood as to which extent the curing of a material is completed. The extent of completion of curing may be obtained by comparing insulation materials in different stages.

The completion of curing may be described by the power of the UV radiation invested in the insulation tape integrated over the time of exposure to the UV radiation. The extent of completion of curing may then be expressed as the current integrated power's percentage of the total integrated power at the end of the process. Thus, the extent of completion of curing may result from comparing a partially cured insulation tape, such as, e.g., a B stage insulation tape, and the fully cured insulation tape considering the values of the fully cured insulation tape as maximum values.

Additionally and/or alternatively, the completion of curing may be described by the degree of curing.

In one embodiment, the degree of curing is determined by differential scanning calorimetry (DSC). For example, the DSC scans of a partially cured insulation tape such as, e.g., a B stage insulation tape, and of the freshly mixed, uncured insulation tape material may be compared. The ratio of generated heat flows may then provide the extent of completion of curing.

In another embodiment, the degree of curing is determined by measuring the glass transition temperature (Tg), for example, via DSC. The Tg of a partially cured insulation tape such as, e.g., a B stage insulation tape, and the Tg of a fully cured insulation tape may then be compared. Considering the Tg of the fully cured insulation tape as maximum value, the Tg of the partially cured insulation tape in relation to the maximum value may provide the extent of completion of curing.

Additionally and/or alternatively, the completion of curing may be described by the degree of crosslinking or crosslink density.

In one embodiment, the degree of crosslinking or crosslink density is determined by swelling tests. For a "swelling test" within the scope of the present disclosure, a crosslinked sample may be embedded into a suitable solvent at a specific temperature and then, the change in mass and/or the change in volume may be measured. Within the scope of the present disclosure, the standards ASTM D2765 and ASTM F2214 are envisioned to be usable to determine the degree of crosslinking or crosslink density. For example, swelling tests may be performed for the partially cured insulation tape, such as, e.g., a B stage insulation tape, and the fully cured insulation tape. From these swelling tests, the respective crosslink densities or degrees of crosslinking may then be calculated, which in comparison may provide the extent of completion of curing. Alternatively, as an increased degree of crosslinking or increased crosslink density in a sample results in less swelling, the extent of completion of curing may be approximated by directly comparing the swelling of the partially and the fully cured insulation tape. The swelling may be linearly related to the completion of curing, so that a B stage insulation tape may have x% of completion of curing if the swelling test shows x% of the amount of swelling of the B stage insulation tape compared to the C stage insulation tape (the swelling being the additional swelling relative to the uncured tape and may be positive or negative). For example, a B stage insulation tape may have 50% of completion of curing if the swelling test shows 50% of the amount of swelling of the B stage insulation tape compared to the C stage insulation tape.

In another embodiment, the crosslink density or degree of crosslinking is determined by Dynamic Mechanical Analysis (DMA) or by using a rheometer. For example, running dynamic temperature ramp tests for the partially cured insulation tape such as, e.g., a B stage insulation tape, and for the fully cured insulation tape, the storage moduli may be determined. From the rubbery plateau regions, the crosslinking densities may be calculated, respectively. The extent of completion of curing may then result from comparing the crosslink densities or degrees of crosslinking of the partially cured and the fully cured insulation tape.

There may be a need for additional and/or alternative methods to the ones described above, for example, during service operations such as, e.g., at a centralised shop or at the repair shop, or if the UV-curable dielectric insulation tape is applied "on-site". Within the context of the present disclosure, these methods may be one of the following.

In one embodiment, the completion of curing may be determined by dielectric measurements. For example, the frequency response of the losses in the real and imaginary parts of the dielectric constant may be plotted against the frequency. Comparing the results for a partially cured insulation tape, such as, e.g., a B stage insulation tape and for a fully cured insulation tape, may then provide an indication of the extent of completion of curing.

In another embodiment, the completion of curing may be determined by ultrasound measurements. For example, applying ultrasonic waves to a partially cured insulation tape, such as, e.g., a B stage insulation tape and to a fully cured insulation tape, the velocity and attenuation of the ultrasonic waves may be measured. The extent of completion of curing may then result from comparing the values of the fully cured and partially cured insulation tapes.

In another embodiment, the completion of curing may be determined by spectroscopic measurements such as, e.g., FTIR- or Raman-spectroscopy. These spectroscopic measurements may be performed by hand-held devices known to the person skilled in the art, which may be connected to a device, such as, e.g., a mobile phone. The extent of curing may be determined by comparing the results of a partially cured insulation tape, e.g., a B stage insulation tape, and a fully cured insulation tape.

### [Applying the prepreg tape: the UV-transparent mold, wrapped structure]

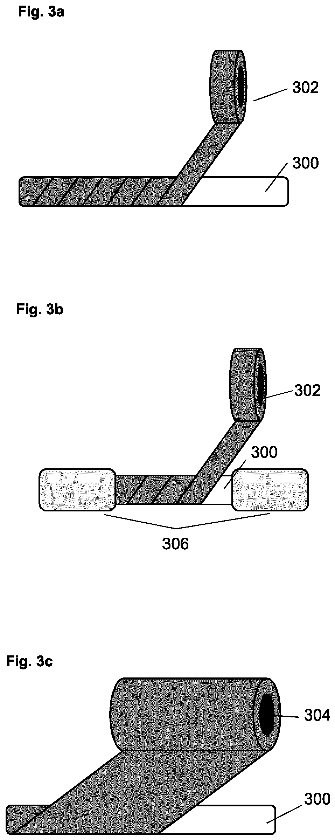

According to one aspect of the invention, the prepreg UV-curable insulation tape may be wrapped around the metallic conductor once or several times. Fig. 3a-c show possible embodiments for an UV-curable insulation tape (302) or UV-curable insulation foil (304) wrapped around a metallic conductor (300). The metallic conductor may possess pre-existing insulation (306), which, after the damaged parts are removed, such as, e.g., in step S02A, can be complemented by applying, e.g., the UV-curable insulation tape (302).

Slot corona protection may be applied once the insulation tape that has been applied to the metallic conductor, is fully cured. The slot corona protection may also be UV-curable material. In one embodiment, slot corona protection is applied after fully-curing the insulation tape that has been applied to the metallic conductor, e.g., on-site. In another embodiment, the slot corona protection is applied after fully-curing the insulation tape that has been applied to the metallic conductor, but before inserting the now insulated metallic conductor to its desired place of use.

According to another aspect, the metallic conductor, on which the prepreg tape may be applied, may be placed in a UV-transparent mold. The UV-transparent mold may aid shaping the metallic conductor to its final geometry. Its material does not have to withstand the high pressures typically employed in the conventional RR process. Preferably, the UV-transparent mold is made of PMMA.

### [removing excess resin and/or encapsulated air]

According to another aspect, excess resin and/or air encapsulated in the insulation provided by a prepreg tape in the sense of the present disclosure, may be removed by applying pressure. The applied pressure may be chosen to be higher or equal to 1 atmosphere (atm), or to be lower than 1 atmosphere (atm). Additionally and/or alternatively, excess resin and/or air encapsulated in the insulation provided by a prepreg tape in the sense of the present disclosure, may be removed by applying vibration. The applied vibration may be chosen to have a high frequency, preferably 15 - 60 kilohertz (kHz) and more preferably 20 - 45 kilohertz (kHz).

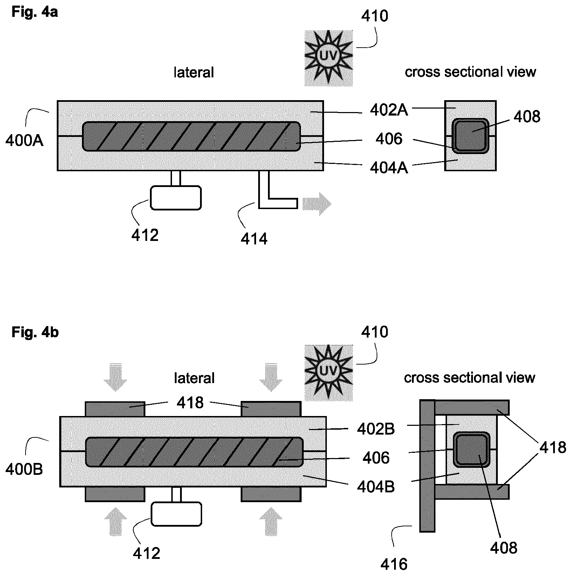

Fig. 4a shows the use of a UV-transparent mold (400A) with an upper half (402A) and a lower half (404A) to cure the B stage insulation tape (406) on a metallic conductor (408) with UV radiation by means of a radiation source (410) while applying high frequency vibration by means of a vibration generator (412) and/or pressure by means of a pressure pump (414).

In such an embodiment, excess resin and air encapsulated in the insulation provided by a prepreg tape in the sense of the present disclosure may be removed by applying high frequency vibration between 20 kilohertz (kHz) and 45 (kilohertz) and pressure between 100 and 500 millibar (mbar).

Fig. 4b shows the use of a compressible UV-transparent mold (400B) with an upper half (402B) and a lower half (404B) to cure the B stage insulation tape (406) on a metallic conductor (408) with UV radiation by means of a radiation source (410) while applying high frequency vibration by means of a vibration generator (412) and/or pressure by means of a hydraulic press (416) with clamps (418).

In such an embodiment, excess resin and air encapsulated in the insulation provided by a prepreg tape in the sense of the present disclosure may be removed by applying high frequency vibration between 20 kilohertz (kHz) and 45 (kilohertz) and pressure higher than 1 atm (atmosphere).

### [UV radiation]

According to the present invention, UV radiation may be used for curing the UV-curable dielectric resin formulation. For example, to achieve the C stage of the UV-curable insulation tape, the UV radiation may be chosen so that the intensity of the wavelength of the UV light allow for completing the curing process. It is envisioned by the present disclosure that the UV radiation interacts with the photo-initiators present in the UV-curable resin formulation in the insulation tape, activating the chemical cross-reaction necessary for the curing.

In one embodiment, the UV radiation is emitted by a portable UV lamp. The usage of a portable UV lamp may facilitate and adapt the curing process to the demands given by the embedding of the metallic conductor that is to be insulated by any method according to the claims of the present disclosure. In that regard, "embedding" is to be understood as structural and/or spatial conditions defined by the place of use of the metallic conductor. The place of use may be, e.g., the electrical machine, to which the metallic conductor belongs or in which it may be inserted.

Within the context of the UV radiation, it should also be mentioned that the UV-transparency of the prepreg insulation tape, which may be applied to the metallic conductor as told in any of the methods according to the present disclosure, is at least 75% and/or at most 90%. The UV-transparency is preferably defined with respect to UV radiation with a wavelength range between 300 and 420 nm and/or with a power between 250 and 400 Watt (W).

### List of reference numerals

- 200: matrix material
- 202: UV-curable dielectric resin formulation
- 204: UV-transparent thermoset resin
- 206: UV-transparent dielectric insulator
- 208: photo-initiator
- 210, 212: film-like material
- 302: UV-curable insulation tape
- 304: UV-curable insulation foil
- 300,408: metallic conductor
- 306: pre-existing insulation of a metallic conductor
- 400A,B: (compressible) UV-transparent mold
- 402A,B: upper half of the (compressible) UV-transparent mold
- 404A,B: lower half of the (compressible) UV-transparent mold
- 406: B stage, UV-curable insulation tape
- 410: UV radiation source
- 412: vibration generator
- 414: pressure pump
- 416: hydraulic press
- 418: clamps

## Claims

1. Method for electrically insulating a metallic conductor, the method comprising providing a prepreg tape comprising a UV-curable dielectric resin formulation in a semi-cured B stage,
applying the prepreg tape as an electrical insulation to the metallic conductor, and fully-curing the prepreg tape to a C stage by applying UV radiation to the prepreg tape.

2. Method according to claim 1, wherein
the UV-curable dielectric resin formulation comprises
an UV-transparent thermoset resin,
a photo-initiator, and
an UV-transparent dielectric insulator.

3. Method according to any one of the preceding claims, wherein
the step of providing a prepreg tape comprises partially curing the tape from an uncured stage to the B stage by applying UV radiation with a power of 250 - 400 W and achieving a less than 70% of completion of curing, but at least 30%.

4. Method according to any one of the preceding claims, wherein
the step of fully-curing the prepreg tape comprises applying UV radiation with a power of 250 - 400 W to the prepreg tape until at least 80% of completion of curing is achieved.

5. Method according to any one of the preceding claims, wherein
the step of fully-curing of the prepreg tape is performed at room temperature and/or at 1 atmosphere.

6. Method according to any one of the preceding claims,
the method comprising applying pressure on the metallic conductor on which the prepreg tape has been applied.

7. Method according to any one of the preceding claims, wherein
the UV transparency of the prepreg tape in the wavelength range between 300 and 420 nm is at least 75% and/or at most 90%.

8. Method according to any one of the preceding claims, wherein
the metallic conductor is a coil, in particular a coil rated for a voltage of at least 200 V and at most 15 kV.

9. Method according to the preceding claim, including applying the prepreg tape as a groundwall insulation of the coil

10. Method according to any one of the preceding claims, wherein
before applying the prepreg tape, the metallic conductor is placed in an UV-transparent mold.

11. Method according to any one of the preceding claims, further comprising extracting air entrapped in the prepreg tape applied to the metallic conductor, preferably by applying pressures lower than 1 atmosphere, more preferably by applying a high frequency, e.g. at a frequency of at least 20 kHz and/or at most 45 kHz vibration to the prepreg tape e.g. via the UV-transparent mold; in particular before the final curing step.

12. Method of producing an electrically insulated metallic conductor, the method comprising providing a metallic conductor, and electrically insulating the metallic conductor by the method according to any one of the preceding claims, whereby the prepreg tape is preferably provided as a groundwall insulation.

13. Method of repairing a pre-existing insulation of a metallic conductor, the pre-existing insulation having a damaged insulation segment, the method comprising:
removing the damaged insulation segment at least partially; and
electrically insulating the metallic conductor by the method according to any one of the preceding claims, the method comprising applying the prepreg tape to the region of the damaged insulation segment.

14. Use of an electrically insulating prepreg tape comprising a UV-curable dielectric resin formulation in a semi-cured B stage for the method according to any one of the preceding claims.

15. Electrically insulating prepreg tape comprising a UV-curable dielectric resin formulation in a semi-cured B stage and configured for electrically insulating a metallic conductor according to the method according to any one of the claims 1 to 13.
